## Europäisches Patentamt
## European Patent Office
## Office européen des brevets

(11) Publication number: **0 106 381**
**B1**

(12) **EUROPEAN PATENT SPECIFICATION**

(45) Date of publication of patent specification: **18.06.86**

(51) Int. Cl.⁴: **G 03 B 27/62,** B 25 C 11/00

(21) Application number: **83201273.6**

(22) Date of filing: **05.09.83**

(54) Copying machine.

(30) Priority: **13.09.82 NL 8203543**

(43) Date of publication of application:
**25.04.84 Bulletin 84/17**

(45) Publication of the grant of the patent:
**18.06.86 Bulletin 86/25**

(84) Designated Contracting States:
**AT BE CH DE FR GB IT LI NL SE**

(56) References cited:
**EP-A-0 022 364**
**US-A-3 625 482**

(73) Proprietor: **Océ-Nederland B.V.**
**St. Urbanusweg 43**
**NL-5914 CC Venlo (NL)**

(72) Inventor: **Hovens, Johannes F. J. E.**
**Leutherweg 34**
**NL-5915 CH Venlo (NL)**
Inventor: **Van Soest, Hendrikus J. J.**
**Willem van Hornestraat 43**
**NL-5988 AP Helden-Dorp (NL)**

(74) Representative: **Bleukx, Lucas Lodewijk Maria, Ir.**
**Océ-Nederland B.V. Patents & Information Dept.**
**Postbus 101**
**NL-5900 MA Venlo (NL)**

Courier Press, Leamington Spa, England.

## Description

This invention relates to a copying machine, the top of which has a cavity at a place readily accessible to the machine operator.

Originals of which copies are required are frequently submitted in the form of a connected bundle to the copying machine operator. The operator then has to remove the connecting means, e.g. a paper clip, before the originals can be fed into the copying machine one by one. The top of the copying machine is generally used as a working surface for the operations required in these conditions. It is known to form this working surface with the cavity referred to hereinbefore, in order to receive and, by means of a magnetic field, retain removed connecting means. When relatively large connecting means are used, e.g. paper clips, the machine operator can readily take hold of such means and place them in the cavity, but when the connecting means are small, e.g. as in the case of staples, and auxiliary means have to be used to remove them from a bundle of originals, such staple or a broken part thereof may readily elude the operator. Then there is a risk that this object is entrained by an original sliding over the working surface, and reaches the interior of the copying machine. This may result in serious damage and malfunctioning of the copying machine.

The object of this invention is so to improve and extend the copying machine referred to hereinbefore that staples are reliably collected and retained. To this end, a flat strip is provided in said cavity, the top of said strip being situated largely in the same plane as the top of the copying machine, one end of said strip being secured to the copying machine and the other end projecting freely and tapering to a point, the pointed end being bent upwards in order to project somewhat above the said tops and adjoining, considered in the longitudinal direction of the strip, a first part gradually increasing in width and in height.

This appliance enables a staple to be removed from a connected bundle of originals by a simple manual movement by moving the bundle over the strip with the bent-over legs of the staple facing upwardly. During this movement, the pointed end of the strip engages the staple and pulls it out of the bundle while the staple legs are bent straight. Removal takes place above the cavity in the working surface so that the staple, when it releases from the strip, always drops into the cavity. The risk of a staple or part thereof moving uncontrollably is thus practically precluded. We note that from US—A—3625482 a staple remover with a strip gradually increasing in height and in width which is manually movable to remove a staple, is already known.

An attractive embodiment of a copying machine according to the invention and the advantages thereof will be discussed hereinafter with reference to the accompanying drawings wherein:

Fig. 1 is a top plan view of a copying machine according to the invention.

Fig. 2 is a detail of the top plan view of the copying machine.

Fig. 3 is a section according to the line III—III in Fig. 2.

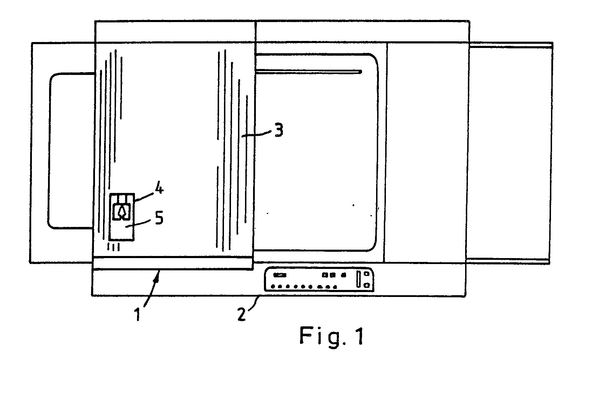

The copying machine according to Fig. 1 comprises a movable cover 1 which, when in closed position, covers the platen for the originals to be copied. An opening 4 is formed in the flat top plate 3 of the cover 1 within reach of an operator situated near the front side 2 of the copying machine.

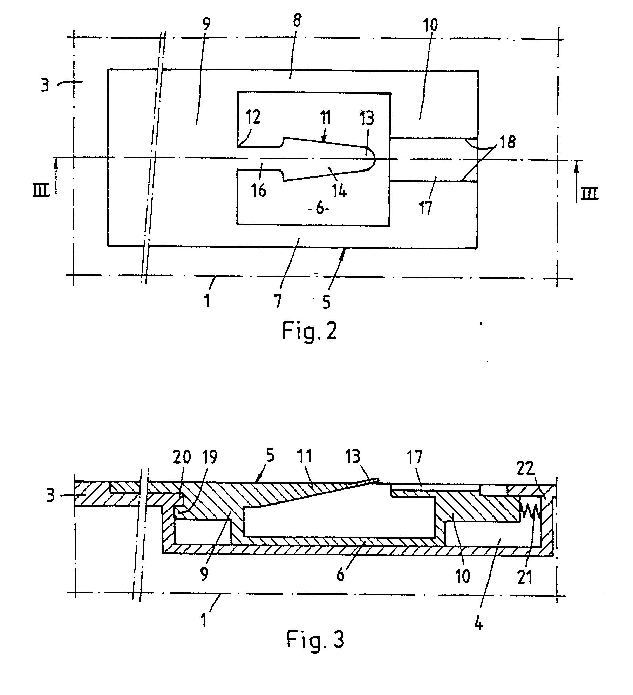

A tray 5, which will be described in greater detail with reference to Figs. 2 and 3, can be secured in opening 4. Tray 5 comprises a base 6 and, connected thereto, upright walls 7, 8, 9 and 10 which adjoin one another at right angles and the smooth top sides of which are situated in the same plane.

A flat strip 11, which also has a smooth surface, is connected by one end 12 to wall 9 and extends between and at equal distances from the parallel walls 7 and 8. The top side of the strip 11 is largely situated in the same plane as the top side of the tray 5. The freely projecting ends 13 of the strip 11 tapers to a point and is bent upwards in order to project somewhat, e.g. 1—2 mm, above the top side of the tray 5. The distance between the end 13 and the wall 10 situated opposite wall 9 is a few millimetres.

Considered in the longitudinal direction, the strip 11 has parts of varying cross-section. Starting from the pointed end 13, the width of the strip gradually increases over a relatively long part 14, e.g. to about 10.5 mm. The width of the adjoining part 16 is much smaller than the maximum width of the strip. The thickness of the strip increases from 0.7 mm at the pointed end 13 gradually to 6 mm at the transition between the parts 14 and 16. Part 16 has a thickness of 6 mm.

The smooth top sides of the walls 9 and 10 of the tray 5 as considered in the longitudinal direction of the strip are relatively long. A continuous groove 17 is formed in the top side of the wall 10 and has side walls 18, which in extension touch the widest part of the strip 11. The tray 5 is so secured in the opening 4 of the top plate 3 that the top side of the tray is flush with or projects somewhat above the plate 3 and that the pointed end 13 of the strip 11 extends away from the operator. The tray 5 is provided with a lug 19 which can engage behind an edge 20 of the top plate 3. A spring 21 secured to the opposite edge 22 of the top plate 3 presses an inserted tray against the edge 20.

The appliance can be used as follows:

The operator moves a bundle of stapled originals, with the bent-over legs of the staple facing upwardly, into a position with respect to the appliance such that the staple to be removed is situated just in front of the pointed end 13 of the strip 11, this operation being facilitated by the groove walls 18 which form a visual indication and which can guide the bent-over edges of the staple. The operator standing in front of the copying machine then pulls the bundle towards himself while pressing it lightly on the pointed end, so that the pointed end of the strip penetrates between the staple and the bottom original. On continuing the movement in the direction of pulling, the strip 11 pulls the staple out of the bundle, the staple legs being bent straight. In these conditions the staple slides over part 14 of the strip and, depending upon the dimensions, when it reaches a specific place of the strip the staple will be released from the bundle. Then the staple can immediately become detached from the strip and drop into the tray 5, but it may also remain stuck to the strip. In the latter case, the stuck staple will slide further along the strip when upon removal of subsequent staples these staples press against the first staple. When a staple stuck to the strip reaches the transition between the parts 14 and 16, the staple legs lose contact with the strip 11, which narrows here, and the staple drops into the tray 5. The tray 5 can be removed for emptying. The tray may contain magnetic parts in order to retain the received staples in the magnetic field and thus prevent staples easily dropping out of the tray, e.g. when the tray is removed.

**Claims**

1. A copying machine, the top of which has a cavity at a place readily accessible to the machine operator, characterised in that a flat strip (11) is provided in said cavity, the top of said strip being situated largely in the same plane as the top of the machine, one end (12) of said strip being secured to the machine and the other end (13) projecting freely and tapering to a point, the pointed end (13) being bent upwards in order to project somewhat above the said tops and adjoining, considered in the longitudinal direction of the strip (11), a first part (14) gradually increasing in width and in height.

2. A copying machine according to claim 1, characterised in that the said first part (14) passes into a second part (16) having a much smaller width than the maximum width of the first part (14).

3. A copying machine according to any one of the preceding claims, characterised in that the cavity continues past the freely projecting end in extension of the strip (11) in the form of a part (17) which has at least one side wall (18), the extension of which touches the widest part of the strip (11).

4. A copying machine according to any one of the preceding claims, characterised in that the cavity and the strip (11) are provided in a removable tray (5).

**Patentansprüche**

1. Kopiergerät, dessen obere Abdeckplatte an einem von der Bedienungsperson leicht zugänglichen Ort eine Vertiefung aufweist, dadurch gekennzeichnet, dass in dieser Vertiefung ein flacher Streifen (11) angeordnet ist, dessen Oberfläche zum grössten Teil in der gleichen Ebene wie die obere Abdeckplatte des Geräts liegt, wobei ein Ende (12) des Streifens am Gerät befestigt ist und das andere Ende (13) frei vorsteht und spitz zuläuft, welches spitz zulaufende Ende (13) nach oben gebogen ist, um etwas über die Abdeckplatte vorzustehen und, in der Längsrichtung des Streifens (11) gesehen, an einem ersten Teil (14) anliegt, dessen Breite und Höhe allmählich zunehmen.

2. Kopiergerät nach Anspruch 1, dadurch gekennzeichnet, dass der erste Teil (14) in einen zweiten Teil (16) übergeht, der eine viel kleinere Breite als die maximale Breite des ersten Teils (14) aufweist.

3. Kopiergerät nach einem der vorhergehenden Ansprüche, dadurch gekennzeichnet, dass die Vertiefung in der Verlängerung des Streifens (11) über dessen frei vorstehendes Ende in Form eines Teils (17) festgesetzt ist, das mindestens eine Seitenwand (18) aufweist, deren Verlängerung den breitesten Teil des Streifens (11) berührt.

4. Kopiergerät nach einem der vorhergehenden Ansprüche, dadurch gekennzeichnet, dass die Vertiefung und der Streifen (11) in einer abnehmbaren Schale (5) angeordnet sind.

**Revendications**

1. Machine à copier cont la partie supérieure présente une cavité en un point facilement accessible à l'opérateur de la machine, caractérisée en ce qu'une bande plate (11) est prévue dans ladite cavité, la partie supérieure de ladite bande étant située en grande partie dans le même plan que la partie supérieure de la machine, une extrémité (12) de ladite bande étant fixée sur la machine et l'autre extrémité (13) faisant saillie librement et convergeant en une pointe, l'extrémité pointue (13) étant incurvée vers le haut afin de faire un peu saillie au-dessus desdites parties supérieures et, lorsqu'on la considère dans le sens longitudinal de la bande (11) étant attenante à une première partie (14) dont la largeur et la hauteur augmentent progressivement.

2. Machine à copier suivant la revendication 1, caractérisée en ce que ladite première partie (14) passe en une seconde partie (16) ayant une largeur bien plus petite que la largeur maximum de la première partie (14).

3. Machine à copier suivant l'une quelconque des revendications précédentes, caractérisée en ce que la cavité se poursuit dans le prolongement de la bande (11) au-delà de l'extrémité faisant saillie librement, sous la forme d'une partie (17) qui présente au moins une paroi latérale (18), dont le prolongement rencontre la partie la plus large de la bande (11).

4. Machine à copier suivant l'une quelconque des revendications précédentes, caractérisée en ce que la cavité et la bande (11) sont prévues dans un réceptacle amovible (5).

Fig. 1

Fig. 2

Fig. 3